# FASCICULE DE BREVET EUROPEEN

(11) **EP 1 061 425 B1**
(45) Date de publication et mention de la délivrance du brevet: **25.09.2002**
(21) Numéro de dépôt: 00480050.4
(22) Date de dépôt: 16.06.2000
(51) Int. Cl.: G05B 19/42, B26F 1/38

(54) **Procédé de formation d'images prédécoupées par ordinateur**
Verfahren um vorgeschnitte Bilder mit einem Rechner herzustellen
Method for making pre-cut images by computer

(30) Priorité: 16.06.1999 FR 9907633
(43) Date de publication de la demande: 20.12.2000
(73) Titulaire: Octo Communication S.A.R.L., 06270 Villeneuve Loubet (FR)
(72) Inventeur: Salimkhan, Jacques, 06100 Nice (FR)
(74) Mandataire: Bonneau, Gérard

(56) Documents cités:
- US-A- 3 899 949
- US-A- 4 818 207
- PATENT ABSTRACTS OF JAPAN vol. 1998, no. 10, 31 août 1998 (1998-08-31) & JP 10 113893 A (MAX CO LTD), 6 mai 1998 (1998-05-06)
- PATENT ABSTRACTS OF JAPAN vol. 1996, no. 06, 28 juin 1996 (1996-06-28) & JP 08 052691 A (MAX CO LTD), 27 février 1996 (1996-02-27)
- PATENT ABSTRACTS OF JAPAN vol. 016, no. 274 (M-1267), 19 juin 1992 (1992-06-19) & JP 04 069195 A (MIMAKI ENJINIARINGU:KK), 4 mars 1992 (1992-03-04)

## Description

### Domaine Technique :

La présente invention concerne la formation d'images telles que des lettres à fixer sur des objets dans un but d'information, de marquage ou de décoration et concerne en particulier un procédé amélioré de formation d'images prédécoupées par ordinateur.

### Etat de la technique :

Il est courant actuellement de fixer des inscriptions ou des informations sur des objets au moyen d'une opération de transfert dans laquelle les lettres, chiffres ou signes à fixer sont d'abord prédécoupées automatiquement par ordinateur.

Ainsi, il est de pratique courante que les concessionnaires de voitures automobiles apposent leur signature, c'est à dire leur nom et coordonnées, à l'arrière de véhicules vendus par fixation de lettres et chiffres formés dans une feuille de polyvinyle.

L'élaboration de l'inscription à fixer est programmée par ordinateur de manière à commander un outil de découpe pour effectuer le prédécoupage des lettres et chiffres de l'inscription dans un revêtement de polyvinyle sur un support de papier siliconé. La deuxième étape consiste alors à retirer la couche de polyvinyle sur toute la surface du support qui se trouve en dehors des lettres et chiffres. Puis, un papier de transfert est collé sur toute la surface du support comportant d'une part l'inscription et d'autre part toute la surface du support en dehors de ladite inscription. Le papier de transfert est ensuite retiré du support d'origine entraînant les lettres et chiffres qui restent collées sur le papier de transfert du fait que la colle recouvrant le papier de transfert à un pouvoir adhésif plus important que le pouvoir adhésif de la colle maintenant le polyvinyle sur le papier siliconé. Enfin, la dernière étape consiste à positionner le papier de transfert sur lequel se trouve maintenant l'inscription sur l'objet devant recevoir ladite inscription et appliquer une pression au dos du papier de transfert pour que les lettres restent fixées sur l'objet choisi, par exemple la plaque arrière d'un véhicule automobile.

La deuxième étape du procédé qui consiste à retirer la couche de polyvinyle du support sur toute la surface en dehors de l'inscription, ou encore à écheniller selon le langage utilisé dans la profession, comporte une difficulté. Il faut en effet retirer cette couche de polyvinyle à l'intérieur des lettres fermées telles que le « a », le « e », le « d », le « p », etc. et donc s'y reprendre à plusieurs fois pour retirer tout le polyvinyle inutile. En outre, comme les surfaces à l'intérieur des lettres sont relativement petites, il faut effectuer cette opération à l'aide d'une pince, l'opération effectuée avec les doigts n'étant plus possible comme c'est le cas pour toute la grande surface se trouvant en dehors des lettres.

### Exposé de l'invention :

C'est pourquoi le but de l'invention est de réaliser un procédé de formation d'images, notamment des lettres et chiffres formant une inscription, dans lequel l'opération de retrait de la couche de polyvinyle inutile puisse se faire manuellement et rapidement en une seule fois.

L'objet de l'invention est donc un procédé de formation d'image et notamment des inscriptions en lettres et chiffres, consistant à découper au moyen d'un outil de découpe un revêtement en matière plastique recouvrant la base du support en suivant le contour de l'image à former de façon à rendre la partie de revêtement appartenant à l'image indépendante de la partie de revêtement n'appartenant pas à l'image, et à retirer ensuite le revêtement de matière plastique de toute la partie n'appartenant pas à l'image. L'image est constituée d'un ou de plusieurs motifs, chacun des motifs ne comportant aucune surface intérieure fermée de sorte que l'outil de découpe puisse découper entièrement le contour du motif tout en restant continuellement en position de découpe. La partie n'appartenant pas à l'image forme ainsi une surface topologiquement continue telle que le retrait de la partie de revêtement n'appartenant pas à l'image se fait en une seule fois par décollement du revêtement.

### Description brève des figures :

Les autres buts, objets et caractéristiques de l'invention apparaîtront clairement à la lecture de la description suivante faite en référence aux dessins dans lesquels :
La figure 1 représente schématiquement le système utilisé pour la découpe d'image par ordinateur selon l'invention,
La figure 2 représente schématiquement l'outil de découpe en position de découpe du revêtement de polyvinyle sur la base en papier siliconé,
Les figures 3A et 3B représentent respectivement la partie de la couche de polyvinyle à retirer et l'inscription restante après retrait pour un exemple d'inscription à réaliser,
Les figures 4A et 4B représentent respectivement une lettre B classique comportant deux surfaces de la couche de polyvinyle à retirer isolées du reste de la partie de la couche de polyvinyle à retirer et la même lettre B dont les parties isolées ont été ouvertes, et
Les figures 5A, 5B et 5C représentent des polices de caractères dans lesquelles les parties fermées des lettres ont été ouvertes de façon à être conformes à l'invention.

### Description détaillée de l'inventon :

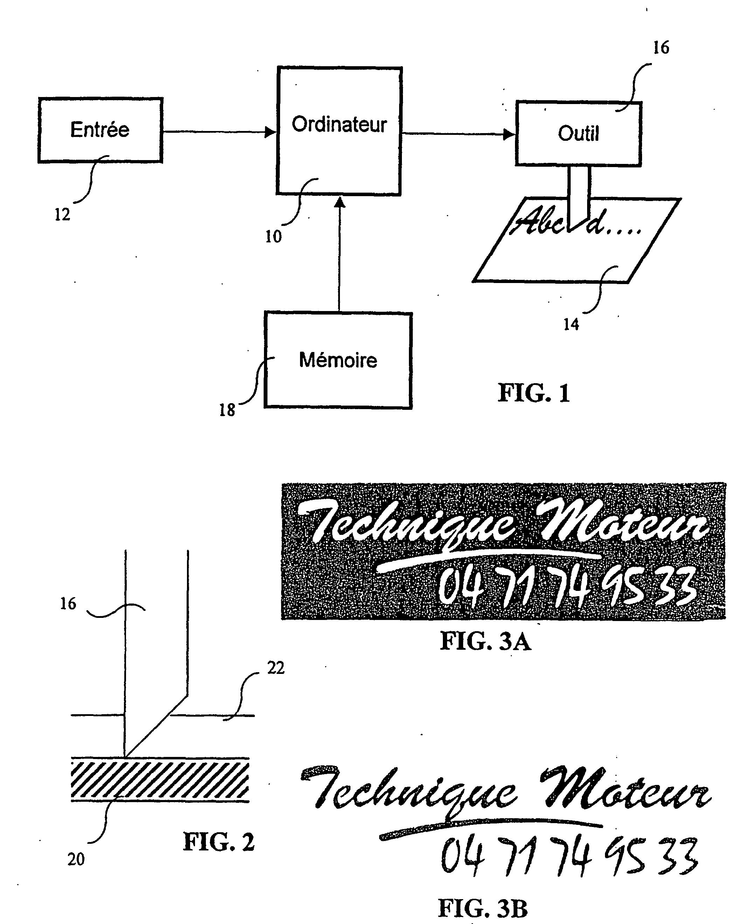

Le système de découpe dans lequel est incorporée l'invention est illustré sur la figure 1. Un ordinateur 10 reçoit un programme de découpe d'une image, notamment une inscription ou un texte d'information alphanumérique destiné à un panneau signalétique, à une plaque de véhicule ou une décoration, à partir d'une unité d'entrée 12 telle qu'un clavier ou autre dispositif d'entrée. L'ordinateur 10 commande alors la découpe d'un support 14 au moyen d'un outil de découpe 16 en utilisant des motifs (lettres, chiffres ou autres images) emmagasinés dans une mémoire 18.

Le support 14, représenté sur la figure 2, est formé généralement d'une base de papier siliconé 20 recouvert d'un revêtement de matière plastique souple 22, de préférence du polyvinyle, collée sur la base par une colle ayant un pouvoir adhésif relativement faible. La découpe de l'image par l'outil de découpe 16 consiste à entailler les contours des motifs constituant l'image sur toute l'épaisseur de la couche de polyvinyle 22 de sorte que celle-ci puisse être retirée de la base 20.

Un exemple d'image illustré sur les figures 3A et 3B peut être une «signature» d'un garagiste formée de son enseigne suivie de son numéro de téléphone écrite selon une police particulière comme on le verra par la suite :
TECHNIQUE MOTEUR
   04 71 74 95 33

Après découpe de l'image, on échenille c'est à dire on retire toute la partie de polyvinyle en dehors de la signature. La partie retirée se présente de la façon illustrée sur la figure 3A, c'est à dire que la signature forme les parties vides de la couche retirée. Par contre, la signature reste collée sur la base comme l'illustre la figure 3B.

Comme il a été mentionné précédemment, le procédé consiste ensuite à coller sur la base comportant l'image un papier de transfert qui, en étant retiré, entraîne l'image adhérant faiblement à la base d'origine. Puis le papier de transfert comportant l'image à l'emplacement voulu et l'image est transférée par pression à l'arrière du papier de transfert et à l'endroit où se trouve l'image.

Lorsque l'image a été découpée par l'outil de découpe sous la commande de l'ordinateur comme il a été expliqué en référence aux figures 1 et 2, le retrait de la partie de polyvinyle recouvrant la base de papier siliconé est fastidieux dans la technique habituelle puisqu'il faut retirer toutes les parties de la couche de polyvinyle se trouvant à l'intérieur des lettres fermées telles que « a », « e », « d », « p » etc. C'est pourquoi l'idée mère de l'invention est d'ouvrir les lettres fermées de manière à ce qu'il n'y ait plus de portion fermée de la couche de polyvinyle enfermée. Cette ouverture des lettres permet que la portion de la couche de polyvinyle à retirer soit une surface topologiquement continue de manière à ce qu'elle soit retirée d'un seul coup. En d'autres termes, il est possible avec une ligne tracée par un stylo d'atteindre tous les points de cette surface sans interrompre le contact du stylo avec la surface.

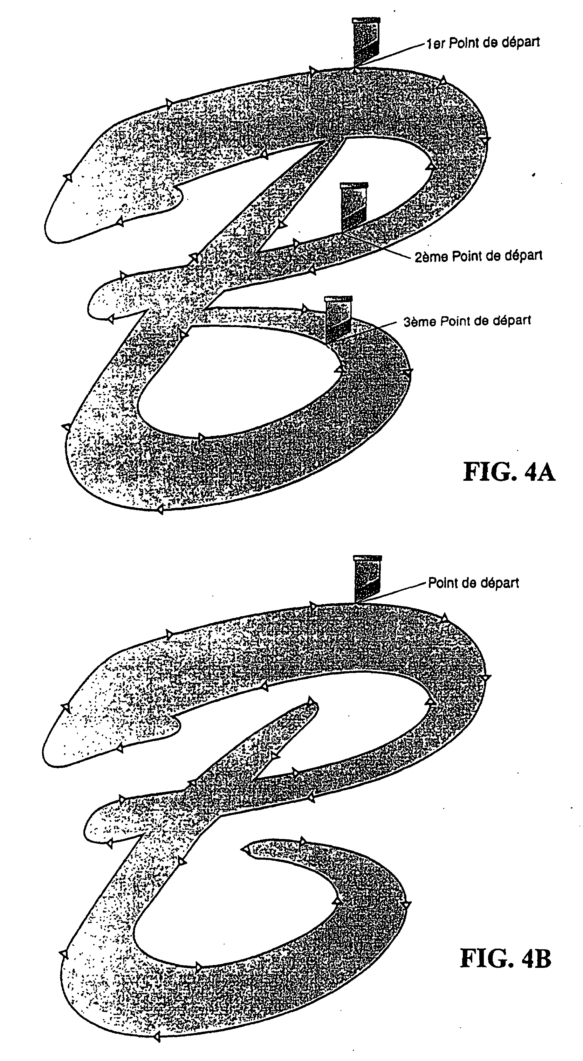

Un exemple d'une telle innovation est donné en référence aux figure 4A et 4B, ou chacune de ces figures représente respectivement la lettre « B » en police Brusch Script d'origine et la même lettre « B » en police Brusch Script modifiée. Les contours de la lettre ont été marqués par des flèches pour bien se rendre compte qu'il est possible de parcourir avec un stylo tout le contour de la lettre B représentée sur la figure 4B alors que ceci n'est pas possible avec la lettre B de la figure 4A. Cette particularité devient particulièrement efficace dans le cas de l'outil de découpe. Il est en effet nécessaire d'effectuer trois départs de découpe dans le cas de la lettre « B » fermée de la figure 4A, alors qu'un seul départ de coupe est suffisant dans le cas de la lettre « B» ouverte de la figure 4B pour découper entièrement la lettre.

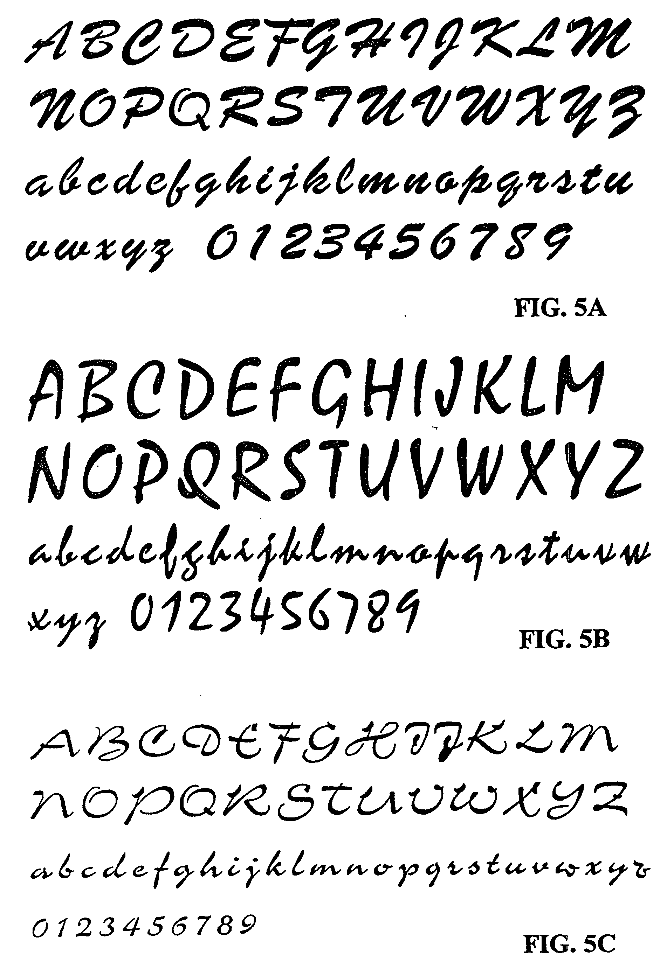

Le principe qui vient d'être énoncé est applicable à toutes les polices de caractères. Ceci est illustré sur les figures 5A, 5B et 5C représentant respectivement trois polices de caractères dites « ouvertes » dans lesquelles toutes les lettres fermées ont été ouvertes. On doit noter que de façon à ne pas retirer le point se trouvant sur un « i » ou un « j » lorsqu'on retire la couche de polyvinyle inutile, ce point est relié au reste de la lettre par un mince filet de polyvinyle comme c'est le cas des lettres minuscules des polices des figures 5A et 5B. En outre, cette liaison évite d'avoir à soulever l'outil de découpe lors de la découpe de la lettre « i » ou de la lettre « j ».

De façon également à éviter d'avoir à soulever l'outil de découpe lors de l'opération de découpe, il est judicieux d'attacher le plus possible les lettres entre elles comme c'est le cas dans les figures 3A et 3B.

Bien que l'invention a été décrite en référence à l'utilisation d'inscriptions formées de lettres et chiffres, il est évidemment à la portée de l'homme du métier d'appliquer l'invention pour la formation d'images quelconques en utilisant les principes énoncés ci-dessus.

## Revendications

1. Procédé de formation d'image sur un support d'image (14) consistant à découper au moyen d'un outil de découpe un revêtement en matière plastique (22) recouvrant la base (20) dudit support en suivant le contour de l'image à former de façon à rendre la partie de revêtement appartenant à l'image indépendante de la partie de revêtement n'appartenant pas à l'image, et à retirer ensuite le revêtement de matière plastique de toute la partie n'appartenant pas à l'image ;
ledit procédé étant **caractérisé en ce que** l'imag est constituée d'un ou de plusieurs motifs, chacun des motifs ne comportant aucune surface intérieure fermée de sorte que l'outil de découpe (16) puisse découper entièrement le contour dudit motif tout en restant continuellement en position de découpe, ladite partie n'appartenant pas à l'image formant ainsi une surface topologiquement continue telle que le retrait de ladite partie de revêtement n'appartenant pas à l'image se fait en une seule fois par décollement dudit revêtement.

2. Procédé selon la revendication 1, dans lequel chacun desdits motifs est une lettre ou un chiffre et ladite image est une combinaison de lettres et/ou de chiffres fournissant des informations sur le produit sur lequel est apposé ledit support.

3. Procédé selon la revendication 2, dans lequel lesdites lettres et lesdits chiffres font partie d'une police de caractères dite « ouverte » dans laquelle aucun caractère ne comporte de partie fermée.

4. Procédé selon la revendication 3, dans lequel lesdits caractères comportant normalement une partie détachée, notamment la lettre « i », comprennent une mini portion de revêtement reliant le corps principal du caractère à ladite partie détachée de sorte que l'outil de découpe (16) reste en position de découpe lors de l'opération de découpe du caractère.

5. Procédé selon la revendication 2, 3 ou 4, dans lequel plusieurs lettres et/ou chiffres sont attachés et forment un seul motif permettant à l'outil de découpe (16) de découper ledit motif tout en restant continuellement en position de découpe.

6. Support d'image (14) comportant une image formée d'une partie de revêtement en matière plastique (22) recouvrant une base (20), ladite image étant obtenue par le procédé de formation d'image selon l'une des revendications précédentes.

7. Procédé selon la revendication 1, dans lequel chacun desdits motifs est une lettre ou un chiffre et ladite image est une combinaison de lettres et/ou de chiffres fournissant des informations sur le produit sur lequel est apposé ledit support.

8. Procédé selon la revendication 2, dans lequel lesdites lettres et lesdits chiffres font partie d'une police de caractères dite « ouverte » dans laquelle aucun caractère ne comporte de partie fermée.

9. Procédé selon la revendication 3, dans lequel lesdits caractères comportant normalement une partie détachée, notamment la lettre « i », comprennent une mini portion de revêtement reliant le corps principal du caractère à ladite partie détachée de sorte que l'outil de découpe (16) reste en position de découpe lors de l'opération de découpe du caractère.

10. Procédé selon la revendication 2, 3 ou 4, dans lequel plusieurs lettres et/ou chiffres sont attachés et forment un seul motif permettant à l'outil de découpe (16) de découper ledit motif tout en restant continuellement en position de découpe.

11. Support d'image (14) comportant une image formée d'une partie de revêtement en matière plastique (22) recouvrant une base (20), ladite image étant obtenue par le procédé de formation d'image selon l'une des revendications précédentes.

## Patentansprüche

1. Verfahren zur Herstellung eines Bildes auf einem Bildträger (14), das darin besteht, dass man mit Hilfe eines Schneidwerkzeugs einen die Basis (20) dieses Trägers bedekkenden Kunststoffüberzug (22) entlang dem Umriss des herzustellenden Bildes so ausschneidet, dass der zum Bild gehörende Überzugteil von dem nicht zum Bild gehörenden Überzugteil unabhängig wird, und dass man dann den Kunststoffüberzug des ganzen nicht zum Bild gehörenden Teils abzieht, **dadurch gekennzeichnet, dass** das Bild aus einem oder mehreren Motiven besteht, deren jedes keine geschlossene Innenfläche aufweist, so dass das Schneidwerkzeug (16) den Umriss des Motivs ganz ausschneiden kann, indem es ständig in Schneidstellung bleibt, wobei der nicht zum Bild gehörende Teil auf diese Weise eine topologisch durchgehende Fläche bildet, so dass das Abziehen des nicht zum Bild gehörenden Überzugteils auf ein Mal durch Ablösen des Überzugs vor sich geht.

2. Verfahren nach Anspruch 1, bei dem jedes der Motive ein Buchstabe oder eine Ziffer ist und das Bild eine Kombination von Buchstaben und/oder Ziffern ist, die Informationen über das Produkt liefert, auf dem der Träger angebracht ist.

3. Verfahren nach Anspruch 2, bei dem die Buchstaben und Ziffern Teil eines sog. offenen Zeichensatzes sind, bei dem keine Type einen geschlossenen Teil besitzt.

4. Verfahren nach Anspruch 3, bei dem die normalerweise einen getrennten Teil aufweisenden Typen, insbesondere der Buchstabe "i", einen Mini-Überzugteil umfassen, der den Hauptkörper der Type mit dem getrennten Teil verbindet, so dass das Schneidwerkzeug (16) beim Ausschneiden der Type in Schneidstellung bleibt.

5. Verfahren nach Anspruch 2, 3 oder 4, bei dem mehrere Buchstaben und/oder Ziffern miteinander verbunden sind und ein einziges Motiv bilden, welches dem Schneidwerkzeug (16) erlaubt, das Motiv auszuschneiden, indem es ständig in Schneidstellung bleibt.

6. Bildträger (14) mit einem Bild, das von einem eine Basis (20) bedeckenden Überzugteil (22) aus Kunststoff gebildet wird und das mit Hilfe des Bildherstellungsverfahrens nach einem der vorhergehenden Ansprüche hergestellt wurde.

7. Verfahren nach Anspruch 1, bei dem jedes der Motive ein Buchstabe oder eine Ziffer ist und das Bild eine Kombination von Buchstaben und/oder Ziffern ist, die Informationen über das Produkt liefert, auf dem der Träger angebracht ist.

8. Verfahren nach Anspruch 2, bei dem die Buchstaben und Ziffern Teil eines sog. offenen Zeichensatzes sind, bei dem keine Type einen geschlossenen Teil besitzt.

9. Verfahren nach Anspruch 3, bei dem die normalerweise einen getrennten Teil aufweisenden Typen, insbesondere der Buchstabe "i", einen Mini-Überzugteil umfassen, der den Hauptkörper der Type mit dem getrennten Teil verbindet, so dass das Schneidwerkzeug (16) beim Ausschneiden der Type in Schneidstellung bleibt.

10. Verfahren nach Anspruch 2, 3 oder 4, bei dem mehrere Buchstaben und/oder Ziffern miteinander verbunden sind und ein einziges Motiv bilden, welches dem Schneidwerkzeug (16) erlaubt, das Motiv auszuschneiden, indem es ständig in Schneidstellung bleibt.

11. Bildträger (14) mit einem Bild, das von einem eine Basis (20) bedeckenden Überzugteil (22) aus Kunststoff gebildet wird und das mit Hilfe des Bildherstellungsverfahrens nach einem der vorhergehenden Ansprüche hergestellt wurde.

## Claims

1. A process for creating an image on an image support (14) consisting in using a cutting tool to cut out a coating made of plastic material (22) covering the substrate (20) of said support by following the contour of the image to be created so as to separate the part of the coating belonging to the image from the part of the coating not belonging to the image, and to then remove the plastic material coating from the entire part which does not belong to the image;
said process being **characterized in that** the image consists of one or more designs, each of the designs featuring no closed interior surface so that the cutting tool (16) can entirely cut out the contour of said design while remaining continuously in cutting position, said part which does not belong to the image thus forming a topologically continuous surface such that said coating part not belonging to the image can be removed at one time by peeling away said coating.

2. The process according to claim 1, in which each of said designs is a letter or a number and said image is a combination of letters and/or numbers providing information on the product on which said support is placed.

3. The process according to claim 2, in which said letters and said numbers form part of an "open" type font in which no character is comprised of a closed part.

4. The process according to claim 3, in which said characters normally feature a detached portion, namely the letter "i", including a minimum portion of the coating connecting the main body of the character to said detached portion so that the cutting tool (16) remains in cutting position during the character cutting operation.

5. The process according to claim 2, 3 or 4, in which several letters and/or numbers are attached and form one single design allowing the cutting tool (16) to cut out said design while remaining continuously in cutting position.

6. An image support (14) featuring an image formed by a coating made of plastic material (22) covering a substrate (20), said image being obtained by the image forming process according to any one of the previous claims.

7. The process according to claim 1, in which each of said designs is a letter or a number and said image is a combination of letters and/or numbers providing information on the product on which said support is placed.

8. The process according to claim 2, in which said letters and said numbers form part of an "open" type font in which no character is comprised of a closed part.

9. The process according to claim 3, in which said characters normally feature a detached portion, namely the letter "i", including a minimum portion of the coating connecting the main body of the character to said detached portion so that the cutting tool (16) remains in cutting position during the character cutting operation.

10. The process according to claim 2, 3 or 4, in which several letters and/or numbers are attached and form one single design allowing the cutting tool (16) to cut out said design while remaining continuously in cutting position.

11. An image support (14) featuring an image formed by a coating made of plastic material (22) covering a substrate (20), said image being obtained by the image forming process according to any one of the previous claims.
